# EUROPEAN PATENT SPECIFICATION

(11) **EP 3 654 031 B1**
(45) Date of publication and mention of the grant of the patent: **23.03.2022**
(21) Application number: 19382725.0
(22) Date of filing: 26.08.2019
(51) Int. Cl.: G01N 29/04, G01N 29/22, G01N 29/24

(54) **ULTRASONIC INSPECTION SYSTEM**
ULTRASCHALLINSPEKTIONSSYSTEM
SYSTÈME D'INSPECTION ULTRASONORE

(30) Priority: 13.11.2018 ES 201831097 U
(43) Date of publication of application: 20.05.2020
(73) Proprietor: Ideko, S.Coop., 20870 Elgoibar Guipuzcoa (ES)
(72) Inventor: AIZPURUA MAESTRE, Iratxe, 20870 ELGOIBAR (GIPUZKOA) (ES); CASTRO CASAS, Ivan, 20870 ELGOIBAR (GIPUZKOA) (ES); GARCIA MONTEJANO, Antonio, 20870 ELGOIBAR (GIPUZKOA) (ES)
(74) Representative: Plasseraud IP

(56) References cited:
- FR-A1- 3 011 332
- GB-A- 978 183
- JP-A- S58 178 252
- US-A1- 2018 277 266

## Description

### Field of the Art

The present invention relates to an ultrasonic inspection system which is particularly configured for detecting discontinuities in butt welds with a single pair of ultrasonic sensors, although it can be used for detecting discontinuities in another type of welds.

### State of the Art

The use of ultrasonic signals in nondestructive testing (NDT) is known. One of its main applications is the detection of discontinuities in welds. For said detection, the use of inspection techniques such as "TOFD" (time-of-flight diffraction), "phased array", AUT (automatic ultrasound inspection"), or combinations thereof, is known.

The TOFD technique is based on the interaction of ultrasonic waves with discontinuities, causing the emission of diffracted waves on the edges, with the ends of the discontinuities behaving like sound sources. More often than not, work is performed with two ultrasonic sensors, one in emission and the other in reception.

In that sense, a pair of ultrasonic sensors is used, one of them in an emitting configuration and the other in a receiving configuration, said sensors being arranged in contact on the surface of the medium to be inspected. The emitter sends, through the medium, an ultrasonic beam or pulse which is received by the receiver, such that depending on the time elapsed between the emission and the reception of the beam, the existence of a discontinuity in the medium can be established.

The ultrasonic sensors are formed by a piezoelectric crystal and a sole or a shoe for the arrangement of the crystal. The piezoelectric crystal has a planar and circular shape and the sole has a straight inclined plane on which the crystal is arranged supported thereon, such that the sensor focuses the ultrasonic beam at a specific angle that depends on the crystal and its arrangement in the sole.

To change the angle with which the ultrasonic beam strikes and to direct said beam to the area of the weld to be inspected, the inclination of the support between the crystal and the sole must be modified, and/or the distance between the emitter and the receiver changed.

Accordingly, when welds having a significant thickness, for example of the order of 100 mm, are to be inspected, a single pair of ultrasonic sensors is not sufficient to cover the entire thickness of the weld. It is therefore necessary to use several pairs of ultrasonic sensors, for example, three pairs of sensors, one pair for inspecting the upper part of the weld, another pair for inspecting the central part, and yet another pair for inspecting the lower part. As a result, several ultrasonic sensors must be used for inspecting a weld having a significant thickness, which increases the cost of the inspection system. Similarly, it involves greater mechanical complexity and difficulty to assure proper attainment of results.

An alternative solution which allows detecting discontinuities in welds, and particularly in welds having a significant thickness, without having to use several sensors, is therefore required.

Examples of related prior art can be found in GB978183A describing improvements in or relating to sound transducers for nondestructive testing of materials and ultrasonic diagnosis, JPS58178252A describing ultrasonic probe or US2018/277266A1 describing device for controlling and measuring welding defects on a cylindrical wall and method implementing same. GB978183A discloses an ultrasonic inspection system comprising an emitter/receiver sensor pair, each sensor comprising a sole having a cylindrically concave, inclined plane and a piezoelectric crystal adapted to said concave shape of the sole.

### Object of the Invention

The object of the present invention relates to an ultrasonic inspection system for detecting discontinuities in welds, and particularly for detecting discontinuities in butt welds.

The ultrasonic inspection system comprises:
- an ultrasonic emitter sensor configured for sending an ultrasonic beam through a medium to be inspected, and
- an ultrasonic receiver sensor configured for receiving the ultrasonic beam,
   o each ultrasonic sensor comprising a piezoelectric crystal and a sole, the sole being able to be arranged on the surface of the medium to be inspected and the sole having an inclined plane with respect to the surface of the medium on which the piezoelectric crystal is supported.

According to the invention, the inclined plane of the sole on which the piezoelectric crystal is supported has a concave shape for defocusing the ultrasonic beam, the piezoelectric crystal being configured to adapt to said concave shape of the sole.

Accordingly, with a single pair of ultrasonic sensors, a defocused ultrasonic beam can be obtained, so the entire thickness of the medium to be inspected can be covered without having to use several pairs of sensors.

According to one embodiment of the invention, the concave shape of the sole is cylindrical. Preferably, said shape has a radius of curvature of less than 100 mm, such that defocusing of the ultrasonic beam which allows covering the entire thickness of the weld is obtained. Even more preferably, the radius of curvature is 20 mm.

According to another embodiment of the invention, the concave shape of the sole is spherical or spheroidal. Preferably, said shape has a first and second radii of curvature, both being less than 100 mm, such that the detection of discontinuities in the medium is improved.

According to the invention, the piezoelectric crystal has three areas for defocusing the ultrasonic beam according to two critical angles and a central angle, and for thereby enabling a more efficient weld inspection. Therefore, the piezoelectric crystal has a first area for directing the ultrasonic beam according to an upper critical angle, a second area for directing the ultrasonic beam according to a central angle, and a third area for directing the ultrasonic beam according to a lower critical angle, wherein the second area is arranged between the first area and the third area, the second area having a width smaller than the width of the first area and third area.

Preferably, the piezoelectric crystal has a width greater than its depth, such that the detection of small discontinuities in the weld is improved.

According to a preferred embodiment, the width of the second area of the piezoelectric crystal is 1/3 the width of the first area or the third area.

According to said preferred embodiment, the width of the piezoelectric crystal is 1.7-fold its depth.

Another object of the invention relates to the use of the ultrasonic inspection system for detecting discontinuities in butt welds.

### Description of the Drawings

Figure 1 shows an ultrasonic inspection system according to an embodiment of the state of the art with a single pair of ultrasonic sensors.
Figure 2 shows an ultrasonic inspection system according to another embodiment of the state of the art with three pairs of ultrasonic sensors for inspecting a weld having a significant thickness.
Figure 3 shows a perspective view of an embodiment of the ultrasonic inspection system of the invention with a single pair of ultrasonic sensors.
Figure 4 shows a perspective view of one of the ultrasonic sensors of the inspection system of the preceding figure.
Figure 5 shows a top plan view of the crystal of the ultrasonic sensor of the preceding figure.
Figure 6 shows a schematic view of the two critical angles and the central angle of the defocusing of the ultrasonic beam.
Figure 7 shows a schematic view of the ultrasonic inspection system of the invention, in which the defocusing of the ultrasonic beam is shown.
Figure 8 shows a perspective view of one of the ultrasonic sensors of the inspection system according to another embodiment of the invention.
Figure 9 shows a perspective view of the sole of the ultrasonic sensor of the embodiment of Figure 4.
Figure 10 shows a perspective view of the sole of the ultrasonic sensor of the embodiment of Figure 8.

### Detailed Description of the Invention

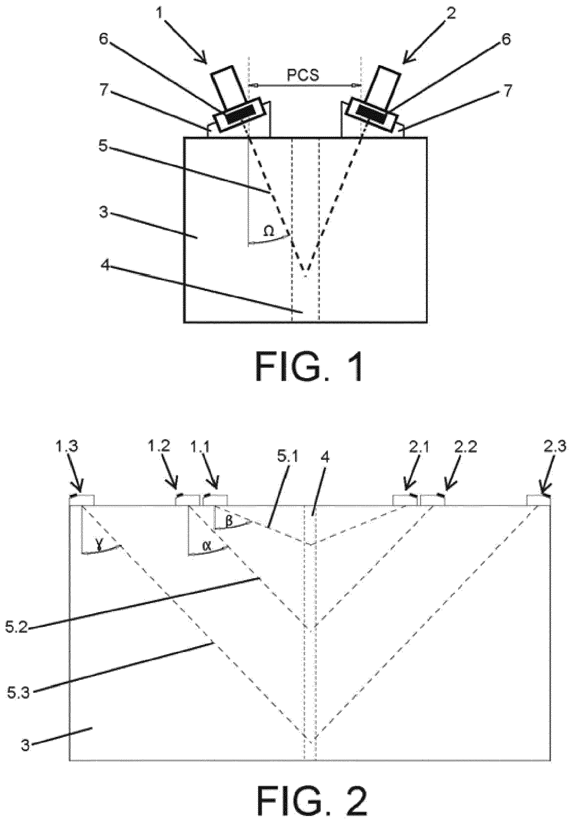

Figure 1 shows an ultrasonic inspection system according to a configuration of the state of the art for carrying out an inspection according to the "TOFD" (time-of-flight diffraction) technique.

The inspection system comprises a pair of ultrasonic sensors (1, 2) which can be arranged on a medium (3) to be inspected, such as, for example, two parts between which there is defined a weld (4). Specifically, the inspection system comprises an ultrasonic emitter sensor (1) which is configured for sending an ultrasonic beam (5) through the medium (3) to be inspected, and an ultrasonic receiver sensor (2) which is configured for receiving the ultrasonic beam (5) after it has be refracted in the medium (3).

The ultrasonic sensors (1, 2) of the inspection system shown in Figure 1 have a piezoelectric crystal (6) and a sole (7), or a shoe, on which the crystal (6) is supported. The crystal (6) has a planar and circular shape and is supported on an straight inclined plane of the sole (7), such that according to said embodiment of the crystal (6) and of the sole (7), the ultrasonic beam (5) is refracted according to a specific angle (Ω), and is therefore directed towards a specific area of the weld (4) of the medium (3). According to this embodiment, in order to focus the ultrasonic beam (5) at different angles, the inclination of the plane of the sole (7) on which the crystal (6) is supported must be modified, and/or the distance (PCS) between the emission and reception of the ultrasonic beam (5) when the beams (5) goes from the sole (7) to the medium (3) and vice versa must be changed.

Figure 2 shows another ultrasonic inspection system according to another configuration of the state of the art for inspecting a weld (4) having a significant thickness also according to the "TOFD" technique.

In this case, to enable covering the entire thickness of the weld (4), an inspection system with three pairs of ultrasonic sensors (1.1, 1.2, 1.3, 2.1, 2.2, 2.3) having the same crystal (6) and sole (7) configuration as the ultrasonic sensors (1, 2) of the inspection system shown in Figure 1, must be used.

The first pair of sensors (1.1, 2.1) sends a first ultrasonic beam (5.1) according to a first angle (β) for inspecting the upper part of the weld (4), the second pair of sensors (2.1, 2.2) sends a second ultrasonic beam (5.2) according to a second angle (α) for inspecting the central part of the weld (4), and the third pair of sensors (2.1, 2.2) sends a third ultrasonic beam (5.3) according to a third angle (γ) for inspecting the lower part of the weld (4).

The invention proposes using a single pair of ultrasonic sensors (1, 2) emitting a single defocused ultrasonic beam (5) with which the entire thickness of the weld (4) can be inspected.

The ultrasonic inspection system of the invention is described below, in which the same references as those used in Figures 1 and 2 are used to refer to similar elements.

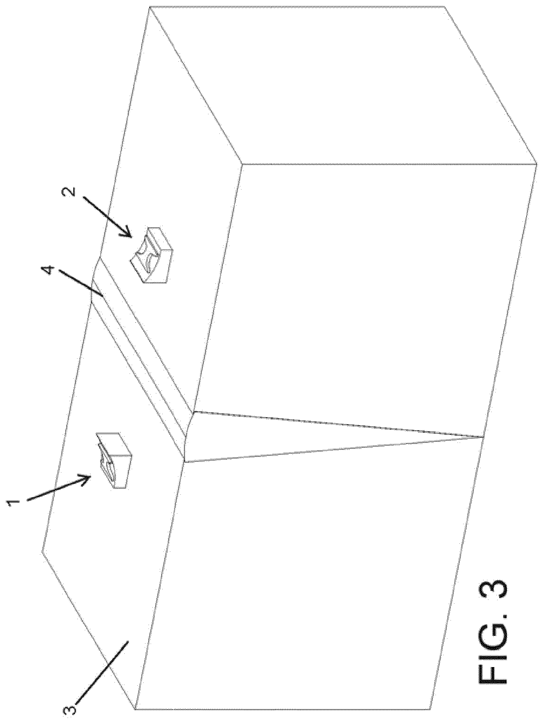

The inspection system comprises an ultrasonic emitter sensor (1) configured for sending an ultrasonic beam (5) through the medium (3) to be inspected and an ultrasonic receiver sensor (2) configured for receiving the ultrasonic beam (5). The ultrasonic sensors (1, 2) can be arranged on the surface of the medium (3) to be inspected according to a position facing one another, with one sensor being arranged on each side of the weld (4), as shown in Figure 3.

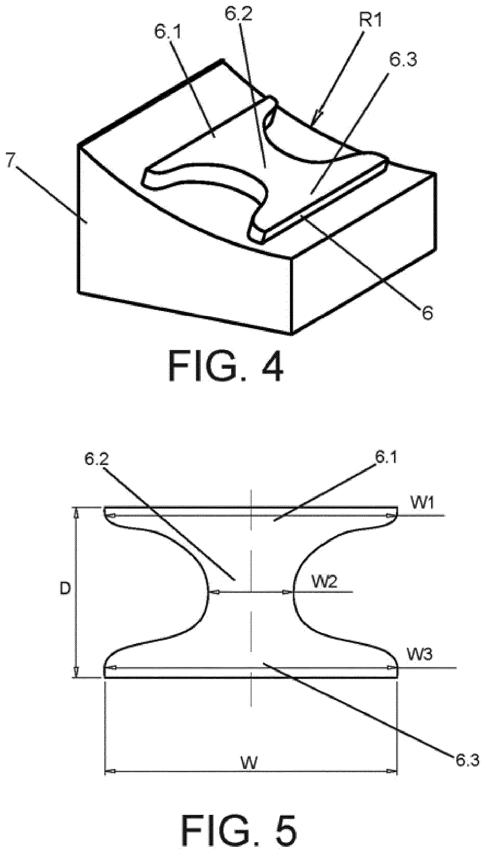

As shown in the embodiment of Figure 4, each ultrasonic sensor (1, 2) has a piezoelectric crystal (6) and a sole (7). The sole (7) can be arranged on the surface of the medium (3) to be inspected and has an inclined plane in its upper part on which the piezoelectric crystal (6) is supported, such that said inclined plane of the sole (7), and therefore the crystal (6), are arranged according to an inclined position with respect to the surface of the medium (3).

The inclined plane has a concave shape, and the crystal (6) has at least one part which adapts to the concave shape, such that the arrangement of the crystal (6) in the sole (7) according to said concave shape allows defocusing the ultrasonic beam (5). Figure 4 shows that the lower part of the crystal (6) has a shape complementary to that of the inclined plane of the sole (7).

The piezoelectric crystal (6) has three areas (6.1, 6.2, 6.3) for defocusing the ultrasonic beam (5) according to two larger and lower critical angles and a central angle (β, α, Y) .

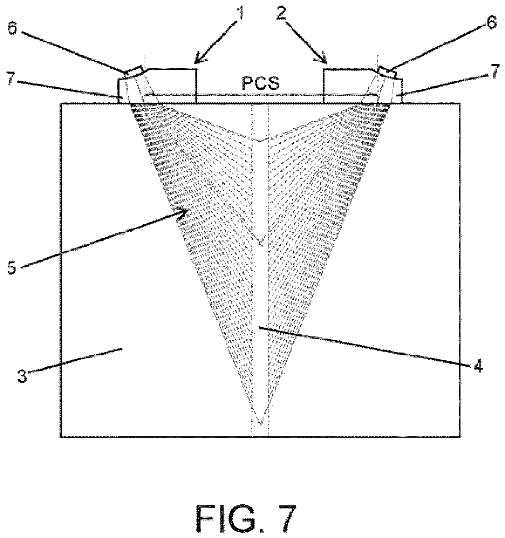

The first area (6.1) of the crystal (6) directs the ultrasonic beam (5) according to an upper critical angle (β) to the upper part of the weld (4), the second area (6.2) directs the ultrasonic beam (5) according to a central angle (α) to the central part of the weld (4), and the third area directs the ultrasonic beam according to a lower critical angle (γ) to the lower part of the weld (4). Therefore, as shown in the schematic view of Figure 7, the ultrasonic inspection system allows defocusing the ultrasonic beam (5) for inspecting the entire thickness of the weld (4).

The second area (6.2) of the piezoelectric crystal (6) is arranged between the first area (6.1) and the third area (6.3), with the width (W2) of the second area (6.2) being smaller than the width (W1, W3) of the first area (6.1) and the third area (6.3) to enable defocusing the ultrasonic beam (5) according to angles (β, α, γ).

Preferably, as seen in Figures 4 and 5, the piezoelectric crystal (6) has a rectangular H-shaped configuration with two larger sides and two smaller sides, in which the width (W) of the crystal (6) gradually decreases from one of its larger sides to the center of the crystal (6), and the width (W) gradually increases from said center until reaching the other larger side of the crystal (6). The crystal (6) therefore has a concave shape at least at its smaller sides.

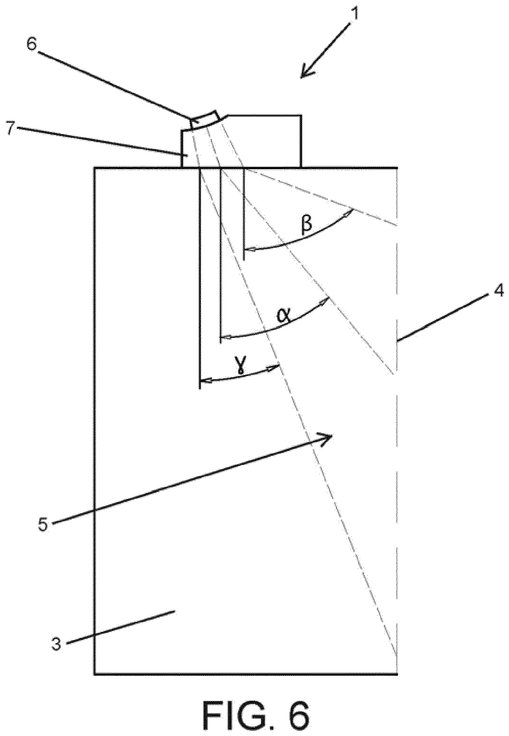

The schematic view of Figure 6 shows an example of the angles (β, α, γ) in which the defocusing of the ultrasonic beam (5) to enable inspecting the entire thickness of the weld (4) is defined. The angles are referenced with respect to the vertical, with the vertical being parallel to the weld (4).

The first area (6.1) of the crystal (6) allows directing the ultrasonic beam (5) to the upper part of the weld (4). As a result of defocusing, the upper critical angle (β) of the beam (5) in that area is large, specifically for a weld (4) having a thickness of 100 mm, the angle (β) is about 70°. Although the distance the beam (5) must travel to reach the upper part of the weld (4) is short, the width (W1) of the first area (6.1) must be increased to achieve the energy required for reaching the weld (4), given that the larger the refracted angle the higher the acoustic pressure that will be required.

The third area (6.3) allows directing the ultrasonic beam (5) to the lower part of the weld (4). The lower critical angle (γ) due to defocusing in this area is small, specifically for a weld (4) having a thickness of 100 mm, the angle (γ) is about 20°, however, given that the distance the beam (5) must travel to reach the lower part of the weld (4) is large, the width (W3) of the third area (6.3) must also be increased to achieve the required acoustic pressure.

The second area (6.2) allows directing the ultrasonic beam (5) to the central part of the weld (4). For a weld (4) having a thickness of 100 mm, the refracted angle (α) in this area is about 40°. Given that the second area (6.2) obtains acoustic pressure from the first area (6.1) and the third area (6.3), and so as not to focus the beam (5) excessively on the central part of the weld (4), the width (W2) of the crystal in the second area (6.2) must be reduced with respect to the width of the other areas (6.1, 6.3).

Taking into account that the weld to be inspected has a considerable thickness (of up to 100 mm), as seen in Figure 7, the ultrasonic sensors (1, 2) are arranged facing one another with a gap (PCS) of about 70 mm between the emission and reception of the ultrasonic beam (5), although the inspection system allows correctly detecting discontinuities in the weld (4) at smaller distances.

To enable correctly detecting small discontinuities of the order of 1.5 - 2 mm, the crystal (6) must have a width (W) greater than its depth (D), given that if the depth (D) is increased, the width of the ultrasonic beam (5) is also increased, which would complicate the detection of small discontinuities. In other words, by increasing depth (D), the signals generated by means of beam diffraction in the upper part and lower part of the discontinuity would overlap, making it impossible to distinguish the signals from one another when they are represented on screen.

According to the embodiment shown in Figures 4 and 5, preferably the width (W2) of the second area (6.2) of the crystal (6) is about 1/3 the width (W1, W3) of the first area (6.1) or the third area (6.3), the width of the first area and third area being the same.

Also according to said embodiment, the width (W) of the piezoelectric crystal (6) is about 1.7-fold its depth (D).

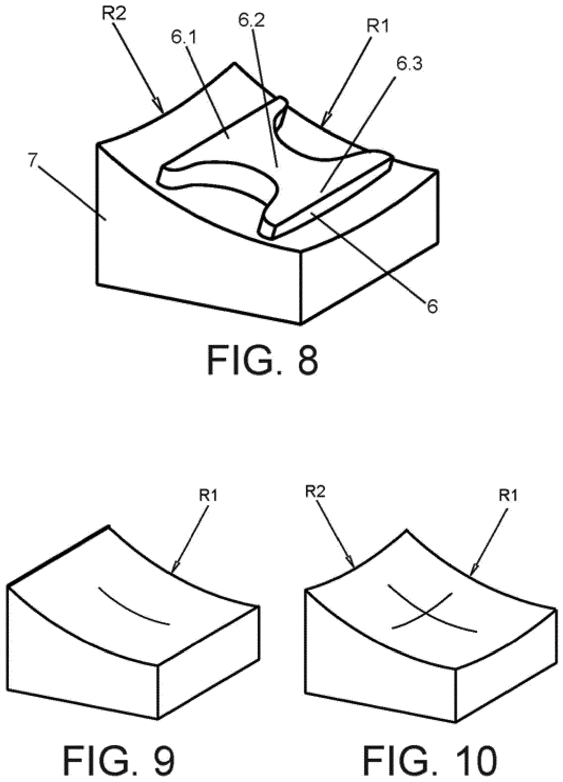

Figures 4 and 9 show an embodiment of the sole (7) in which the inclined plane for supporting the piezoelectric crystal (6) has a cylindrical concave shape. Said shape has a radius of curvature (R1) of less than 100 mm, and preferably 20 mm. The radius of curvature (R1) is arranged parallel to the smaller sides of the piezoelectric crystal (6).

Figures 8 and 10 show another embodiment of the sole (7) in which the inclined plane for supporting the piezoelectric crystal (6) has a spherical or spheroidal concave shape. Said shape has a first and second radii of curvature (R1, R2), both radii being smaller than 100 mm.

The first radius of curvature (R1) is arranged parallel to the smaller sides of the piezoelectric crystal (6), whereas the second radius of curvature (R1) is arranged parallel to the larger sides of the piezoelectric crystal (6).

In both embodiments, the crystal has a complementary shape, at least in its lower part, to adapt to the inclined plane of the sole (7).

## Claims

1. An ultrasonic inspection system comprising:
• an ultrasonic emitter sensor (1) configured for sending an ultrasonic beam (5) through a medium (3) to be inspected, and
• an ultrasonic receiver sensor (2) configured for receiving the ultrasonic beam (5),
∘ each ultrasonic sensor (1, 2) comprising a piezoelectric crystal (6) and a sole (7), the sole (7) being able to be arranged on the surface of the medium (3) to be inspected, and the sole (7) having an inclined plane with respect to the surface of the medium (3) on which the piezoelectric crystal (6) is supported,
wherein the piezoelectric crystal (6) has a depth (D) and a width (W),
wherein the depth (D) of the piezoelectric crystal (6) is defined as dimension extending along the slope length of the inclined plane of the sole (7), and
wherein the width (W) of the piezoelectric crystal (6) is defined as dimension extending perpendicular to the slope length of the inclined plane of the sole (7), wherein
the inclined plane of the sole (7) on which the piezoelectric crystal (6) is supported has a concave shape for defocusing the ultrasonic beam (5), the piezoelectric crystal (6) being configured to adapt to said concave shape of the sole (7),
wherein the piezoelectric crystal (6) has:
• a first area (6.1) for directing the ultrasonic beam (5) according to an upper critical angle (β), said first area (6.1) having a first width (W1) extending parallel with the width (W) of the piezoelectric crystal (6),
• a second area (6.2) for directing the ultrasonic beam (5) according to a central angle (α), said second area (6.2) having a second width (W2) extending parallel with the width (W) of the piezoelectric crystal (6), and
• a third area (6.3) for directing the ultrasonic beam (5) according to a lower critical angle (γ), said third area (6.3) having a third width (W3) extending parallel with the width (W) of the piezoelectric crystal (6),
wherein the second area (6.2) of the piezoelectric crystal (6) is arranged between the first area (6.1) and the third area (6.3), and wherein the second width (W2) of the second area (6.2) is smaller than the first width (W1) of the first area (6.1) and the third width (W3) of the third area (6.3).

2. The ultrasonic inspection system according to the preceding claim, **characterized in that** the concave shape of the sole (7) is cylindrical.

3. The ultrasonic inspection system according to the preceding claim, **characterized in that** the cylindrical concave shape has a radius of curvature (R1) of less than 100 mm.

4. The ultrasonic inspection system according to the preceding claim, **characterized in that** the radius of curvature (R1) is 20 mm.

5. The ultrasonic inspection system according to claim 1, **characterized in that** the concave shape of the sole (7) is spherical or spheroidal.

6. The ultrasonic inspection system according to the preceding claim, **characterized in that** the spherical or spheroidal concave shape has a first and second radii of curvature (R1, R2), both being less than 100 mm.

7. The ultrasonic inspection system according to the preceding claim, **characterized in that** the width (W2) of the second area (6.2) is 1/3 the width (W1, W3) of the first area (6.1) or third area (6.3) .

8. The ultrasonic inspection system according to any one of the preceding claims, **characterized in that** the piezoelectric crystal (6) extends in a rectangle having sides defined by the width (W) and depth (D) of the piezoelectric crystal (6), and **in that** the piezoelectric crystal (6) has a shape of letter H.

9. The ultrasonic inspection system according to any one of the preceding claims, **characterized in that** the piezoelectric crystal (6) has the width (W) greater than its depth (D).

10. The ultrasonic inspection system according to the preceding claim, **characterized in that** the width (W) of the piezoelectric crystal (6) is 1.7-fold its depth (D).

11. The ultrasonic inspection system according to any one of the preceding claims, **characterized in that** the ultrasonic sensors (1, 2) are arranged facing one another with a gap (PCS) of 70 mm between the emitter sensor (1) and receiver sensor (2).

12. Use of the ultrasonic inspection system according to any one of the preceding claims for detecting discontinuities in butt welds.

## Patentansprüche

1. Ultraschallinspektionssystem aufweisend:
- einen Ultraschall-Emittersensor (1), der konfiguriert ist, um einen Ultraschallstrahl (5) durch ein zu untersuchendes Medium (3) zu senden, und
- einen Ultraschall-Empfängersensor (2), der konfiguriert ist, um den Ultraschallstrahl (5) zu empfangen,
wobei jeder Ultraschall-Sensor (1, 2) einen piezoelektrischen Kristall (6) und eine Sohle (7) aufweist, wobei die Sohle (7) fähig ist, auf der Oberfläche des zu untersuchenden Mediums (3) angeordnet zu werden, und die Sohle (7) eine schräge Ebene bezüglich der Oberfläche des Mediums (3) aufweist, auf der der piezoelektrische Kristall (6) gelagert ist,
wobei der piezoelektrische Kristall (6) eine Tiefe (D) und eine Breite (W) hat, die Tiefe (D) des piezoelektrischen Kristalls (6) als eine Abmessung definiert ist, die sich entlang der Neigungslänge der schrägen Ebene der Sohle (7) erstreckt, und die Breite (W) des piezoelektrischen Kristalls (6) als eine Abmessung definiert ist, die sich senkrecht zu der Neigungslänge der schrägen Ebene der Sohle (7) erstreckt,
wobei die schräge Ebene der Sohle (7), auf der der piezoelektrische Kristall (6) gelagert ist, eine konkave Gestalt zum Defokussieren des Ultraschallstrahls (5) hat, und der piezoelektrische Kristall (6) konfiguriert ist, um sich an die konkave Gestalt der Sohle (7) anzupassen,
wobei der piezoelektrische Kristall (6) aufweist:
einen ersten Bereich (6.1) zum Lenken des Ultraschallstrahls (5) gemäß einem oberen kritischen Winkel (β), wobei der erste Bereich (6.1) eine erste Breite (W1) hat, die sich parallel mit der Breite (W) des piezoelektrischen Kristalls (6) erstreckt,
einen zweiten Bereich (6.2) zum Lenken des Ultraschallstrahls (5) gemäß einem zentralen Winkel (α), wobei der zweite Bereich (6.2) eine zweite Breite (W2) hat, die sich parallel mit der Breite (W) des piezoelektrischen Kristalls (6) erstreckt, und
einen dritten Bereich (6.3) zum Lenken des Ultraschallstrahls (5) gemäß einem unteren kritischen Winkel (γ), wobei der dritte Bereich (6.3) eine dritte Breite (W3) hat, die sich parallel mit der Breite (W) des piezoelektrischen Kristalls (6) erstreckt,
wobei der zweite Bereich (6.2) des piezoelektrischen Kristalls (6) zwischen dem ersten Bereich (6.1) und dem dritten Bereich (6.3) angeordnet ist, und wobei die zweite Breite (W2) des zweiten Bereichs (6.2) kleiner als die erste Breite (W1) des ersten Bereichs (6.1) und die dritte Breite (W3) des dritten Bereichs (6.3) ist.

2. Ultraschallinspektionssystem nach dem vorstehenden Anspruch, **dadurch gekennzeichnet, dass** die konkave Gestalt der Sohle (7) zylindrisch ist.

3. Ultraschallinspektionssystem nach dem vorstehenden Anspruch, **dadurch gekennzeichnet, dass** die zylindrische konkave Gestalt einen Krümmungsradius (R1) von weniger als 100 mm hat.

4. Ultraschallinspektionssystem nach dem vorstehenden Anspruch, **dadurch gekennzeichnet, dass** der Krümmungsradius (R1) 20 mm ist.

5. Ultraschallinspektionssystem nach Anspruch 1, **dadurch gekennzeichnet, dass** die konkave Gestalt der Sohle (7) sphärisch oder sphäroidal ist.

6. Ultraschallinspektionssystem nach dem vorstehenden Anspruch, **dadurch gekennzeichnet, dass** die sphärische oder sphäroidale konkave Gestalt einen ersten und zweiten Krümmungsradius (R1, R2) hat, die beide kleiner als 100 mm sind.

7. Ultraschallinspektionssystem nach dem vorstehenden Anspruch, **dadurch gekennzeichnet, dass** die Breite (W2) des zweiten Bereichs (6.2) 1/3 der Breite (W1, W3) des ersten Bereichs (6.1) oder dritten Bereichs (6.3) ist.

8. Ultraschallinspektionssystem nach einem der vorstehenden Ansprüche, **dadurch gekennzeichnet, dass** der piezoelektrische Kristall (6) sich in einem Rechteck erstreckt, das durch die Breite (W) und Tiefe (D) des piezoelektrischen Kristalls (6) definierte Seiten hat, und dadurch, dass der piezoelektrische Kristall (6) eine Gestalt des Buchstabens H hat.

9. Ultraschallinspektionssystem nach einem der vorstehenden Ansprüche, **dadurch gekennzeichnet, dass** die Breite (W) des piezoelektrischen Kristalls (6) größer als seine Tiefe (D) ist.

10. Ultraschallinspektionssystem nach einem der vorstehenden Ansprüche, **dadurch gekennzeichnet, dass** die Breite (W) des piezoelektrischen Kristalls (6) das 1,7-fache seiner Tiefe (D) ist.

11. Ultraschallinspektionssystem nach einem der vorstehenden Ansprüche, **dadurch gekennzeichnet, dass** die Ultraschall-Sensoren (1, 2) einander gegenüberliegend angeordnet sind, mit einem Zwischenraum (PCS) von 70 mm zwischen dem Emittersensor (1) und dem Empfängersensor (2).

12. Verwendung des Ultraschallinspektionssystems nach einem der vorstehenden Ansprüche zum Detektieren von Diskontinuitäten in Stumpfnähten.

## Revendications

1. Système d'inspection ultrasonore comprenant :
• un capteur émetteur à ultrasons (1) configuré pour envoyer un faisceau ultrasonore (5) à travers un milieu (3) à inspecter, et
• un capteur récepteur à ultrasons (2) configuré pour recevoir le faisceau ultrasonore (5),
∘ chaque capteur à ultrasons (1, 2) comprenant un cristal piézoélectrique (6) et une semelle (7), la semelle (7) pouvant être disposée à la surface du milieu (3) à inspecter, et la semelle (7) ayant un plan incliné par rapport à la surface du support (3) sur laquelle le cristal piézoélectrique (6) est supporté,
dans lequel le cristal piézoélectrique (6) a une profondeur (D) et une largeur (W), dans lequel la profondeur (D) du cristal piézoélectrique (6) est définie comme une dimension s'étendant le long de la longueur de pente du plan incliné de la semelle (7), et
dans lequel la largeur (W) du cristal piézoélectrique (6) est définie comme une dimension s'étendant perpendiculairement à la longueur de pente du plan incliné de la semelle (7),
dans lequel le plan incliné de la semelle (7) sur laquelle est supporté le cristal piézoélectrique (6) a une forme concave pour défocaliser le faisceau ultrasonore (5), le cristal piézoélectrique (6) étant configuré pour s'adapter à ladite forme concave de la semelle (7),
dans lequel le cristal piézoélectrique (6) a :
• une première zone (6.1) pour diriger le faisceau ultrasonore (5) selon un angle critique supérieur (β), ladite première zone (6.1) ayant une première largeur (W1) s'étendant parallèlement à la largeur (W) du cristal piézoélectrique (6),
• une deuxième zone (6.2) pour diriger le faisceau ultrasonore (5) selon un angle central (α), ladite deuxième zone (6.2) ayant une deuxième largeur (W2) s'étendant parallèlement à la largeur (W) du cristal piézoélectrique (6), et
• une troisième zone (6.3) pour diriger le faisceau ultrasonore (5) selon un angle critique inférieur (γ), ladite troisième zone (6.3) ayant une troisième largeur (W3) s'étendant parallèlement à la largeur (W) du cristal piézoélectrique (6),
dans lequel la deuxième zone (6.2) du cristal piézoélectrique (6) est disposée entre la première zone (6.1) et la troisième zone (6.3), et dans lequel la deuxième largeur (W2) de la deuxième zone (6.2) est inférieure à la première largeur (W1) de la première zone (6.1) et à la troisième largeur (W3) de la troisième zone (6.3).

2. Système d'inspection ultrasonore selon la revendication précédente, **caractérisé en ce que** la forme concave de la semelle (7) est cylindrique.

3. Système d'inspection ultrasonore selon la revendication précédente, **caractérisé en ce que** la forme concave cylindrique a un rayon de courbure (R1) inférieur à 100 mm.

4. Système d'inspection ultrasonore selon la revendication précédente, **caractérisé en ce que** le rayon de courbure (R1) est de 20 mm.

5. Système d'inspection ultrasonore selon la revendication 1, **caractérisé en ce que** la forme concave de la semelle (7) est sphérique ou sphéroïdale.

6. Système d'inspection ultrasonore selon la revendication précédente, **caractérisé en ce que** la forme concave sphérique ou sphéroïdale a des premier et second rayons de courbure (R1, R2), les deux étant inférieurs à 100 mm.

7. Système d'inspection ultrasonore selon la revendication précédente, **caractérisé en ce que** la largeur (W2) de la deuxième zone (6.2) est égale à 1/3 de la largeur (W1, W3) de la première zone (6.1) ou de la troisième zone (6.3).

8. Système d'inspection ultrasonore selon l'une quelconque des revendications précédentes, **caractérisé en ce que** le cristal piézoélectrique (6) s'étend dans un rectangle ayant des côtés délimités par la largeur (W) et la profondeur (D) du cristal piézoélectrique (6), et **en ce que** le cristal piézoélectrique (6) a une forme de lettre H.

9. Système d'inspection ultrasonore selon l'une quelconque des revendications précédentes, **caractérisé en ce que** le cristal piézoélectrique (6) a la largeur (W) supérieure à sa profondeur (D).

10. Système d'inspection ultrasonore selon la revendication précédente, **caractérisé en ce que** la largeur (W) du cristal piézoélectrique (6) est égale à 1,7 fois sa profondeur (D).

11. Système d'inspection ultrasonore selon l'une quelconque des revendications précédentes, **caractérisé en ce que** les capteurs à ultrasons (1, 2) sont disposés en vis-à-vis l'un de l'autre avec un écartement (PCS) de 70 mm entre le capteur émetteur (1) et le capteur récepteur (2).

12. Utilisation du système d'inspection ultrasonore selon l'une quelconque des revendications précédentes pour détecter des discontinuités dans des soudures bout à bout.
